# EUROPÄISCHE PATENTSCHRIFT

(11) **EP 1 646 302 B1**
(45) Veröffentlichungstag und Bekanntmachung des Hinweises auf die Patenterteilung: **26.11.2008**
(21) Anmeldenummer: 04764647.6
(22) Anmeldetag: 31.08.2004
(51) Int. Cl.: G06Q 10/00

(54) **VERFAHREN UND ANORDNUNG ZUR LIEFERUNG EINER SENDUNG**
METHOD AND ARRANGEMENT FOR DELIVERING MAIL
PROCEDE ET DISPOSITIF DE LIVRAISON D'UN ENVOI

(30) Priorität: 02.09.2003 DE 10340904
(43) Veröffentlichungstag der Anmeldung: 19.04.2006
(60) Teilanmeldung: 05022226.4
(73) Patentinhaber: Deutsche Post AG, 53113 Bonn (DE)
(72) Erfinder: MAYER, Boris, 53129 Bonn (DE); ALARIO, Flavio, 53111 Bonn (DE)
(74) Vertreter: Jostarndt, Hans-Dieter
(86) Internationale Anmeldenummer: PCT/EP2004/009681
(87) Internationale Veröffentlichungsnummer: WO 2005/024679

(56) Entgegenhaltungen:
- DE-A- 10 218 178
- DE-A- 19 939 211

## Beschreibung

Die Erfindung betrifft ein Verfahren zur Lieferung einer Sendung, bei dem die Sendung zu einer Zustelladresse transportiert wird, an der ein Benachrichtigungsmittel deponiert wird, falls festgestellt wird, dass keine Übergabe der Sendung an einen berechtigten Empfänger möglich ist. Dabei ist das Benachrichtigungsmittel wenigstens mit Daten zur Kennzeichnung der Paketfachanlage, Daten des Empfängers und dem Identifikationsmittel versehen. Es erfolgt ferner eine Deponierung der Sendung in einem Fach einer elektronischen Paketfachanlage, wobei wenigstens das dem Empfänger der Sendung zugeordnete Identifikationsmittel erfasst und zu dem betreffenden Fach gespeichert wird.

Die Erfindung betrifft ferner eine Anordnung zur Durchführung des Verfahrens.

Bei der Lieferung von Sendungen zu einer Zustelladresse eines Empfängers ist es bekannt, dass der Zusteller an der zustelladresse eine Benachrichtigung hinterlässt, falls er die Sendung keinem berechtigten Empfänger übergeben konnte. Bei solchen Sendungen handelt es sich beispielsweise um Päckchen oder Pakete, welche aufgrund ihrer Größe nicht in herkömmlichen Briefkästen deponiert werden können. Ferner kann es sich um nachweispflichtige Sendungen wie Einschreiben oder Nachnahmesendungen handeln, für welche bei Empfang ein Geldbetrag zu entrichten ist.

Typischerweise handelt es sich bei einer Benachrichtigung um eine Benachrichtigungskarte, auf welcher der Empfänger und die Postfiliale vermerkt sind, bei welcher die Sendung zu einem späteren Zeitpunkt von dem Empfänger abgeholt werden kann. In den meisten Fällen ist die Sendung jedoch erst am nächsten Werktag abholbereit, und der Zeitraum der möglichen Abholung richtet sich nach den Öffnungszeiten der jeweiligen Filiale. Dies ist für den Empfänger sehr nachteilig, da die Öffnungszeiten der Filiale eine bedeutende Einschränkung seiner Flexibilität bedeuten. Beispielsweise ist es für berufstätige Empfänger schwierig, eine Filiale zu deren Öffnungszeiten aufzusuchen, da sich diese typischerweise mit seinen eigenen Arbeitszeiten überschneiden.

Ferner können Filialen zu bestimmten Zeiten überfüllt sein, was für den Empfänger einen weiteren Zeitverlust bedeutet und für ihn nicht sehr komfortabel ist. Er kann seine Sendung somit oftmals nicht zum nächstmöglichen Zeitpunkt in Empfang nehmen, sondern der Zeitpunkt kann sich aufgrund verschiedener negativer Faktoren beträchtlich hinauszögern.

Für den Fall, dass eine Sendung an einer Zustelladresse keinem berechtigten Empfänger übergeben werden kann, besteht demnach ein Bedarf nach Verfahren, bei denen die genannten Nachteile nicht auftreten. Bekannte Verfahren verwenden daher beispielsweise spezielle Fächer an der Zustelladresse, zu denen ein Zusteller Zugriff hat. So können größere Sendungen, für deren Deponierung ein entsprechend großes Fach erforderlich ist, vom Zusteller eingestellt werden. Diese Lösung erfordert jedoch einen hohen Aufwand für die Empfänger, da jeder potenzielle Empfänger einer Sendung ein großes Fach an seiner Zustelladresse anbringen muss. Dies ist baulich schwer zu realisieren, da es zuviel Platz bedarf. Außerdem lassen sich dadurch keine nachweisbedürftigen Sendungen und/oder Nachnahmesendungen deponieren.

Ferner ist es bekannt, Systeme mit elektronischen Fachanlagen so zu betreiben, dass Benutzer unter Angabe verschiedener Daten im System registriert werden und so die Fachanlagen benutzen können. Zu den Registrierungsdaten zählen beispielsweise Name, Adresse und Kontoverbindung, aber auch Mobilfunknummern oder E-mail-Adressen. Mobilfunknummern und E-mail-Adresse werden insbesondere dazu verwendet, Benutzern des Systems Nachrichten zukommen zu lassen.

Bei einer solchen Fachanlage kann es sich um eine Paketfachanlage handeln, die zur Deponierung von Sendungen wie Paketen Fächer verschiedener Größe aufweist. Die Paketfachanlage steht typischerweise in Verbindung mit einer zentralen Datenverwaltungseinheit wie einem Server, in welcher Daten über die Vorgänge an verschiedenen Paketfachanlagen verwaltet werden.

Ist ein Empfänger registrierter Nutzer eines solchen Systems, kann eine Sendung in einer Paketfachanlage deponiert werden, falls der Empfänger an der Zustelladresse nicht anzutreffen ist. Nach der Deponierung kann dem Empfänger beispielsweise per SMS oder E-Mail davon unterrichtet werden, dass eine Sendung für ihn deponiert wurde. Mit der Nachricht kann außerdem ein sendungsbezogener Identifikationscode übermittelt werden, welcher den Empfänger dazu berechtigt, seine Sendung abzuholen. Zur Identifikation kann bei der Registrierung ferner ein personenbezogenes Identifikationsmittel vergeben werden, mit welchen sich der Empfänger an der Paketfachanlage identifizieren kann. Dabei kann es sich beispielsweise um eine Karte oder einen weiteren Code handeln.

Aufgrund der Registrierungsdaten des Empfängers als Nutzer des Systems ist es also möglich, ihm Benachrichtigungen mit sendungsbezogenen Codes zu übermitteln und ihn bei der Abholung einer Sendung an der Paketfachanlage zu identifizieren. Dies ist bei nicht-registrierten Empfängern nicht der Fall, so dass derartige Verfahren nicht eingesetzt werden können. Da jedoch eine vollständige Registrierung aller potenzieller Empfänger schwer zu realisieren ist und gegebenenfalls nicht alle Empfänger über eine Möglichkeit zur SMS- oder E-Mailbenachrichtigung verfügen, besteht weiterhin ein Bedarf nach einem neuen Verfahren zur Lieferung von Sendungen. Da der Einsatz von Paketfachanlagen auf registrierte Nutzer beschränkt ist, ist ferner die Auslastung eingesetzter Paketfachanlagen nur begrenzt.

Die deutsche Offenlegungsschrift DE 199 39 211 A1 beschreibt beispielsweise ein Verfahren zum automatisierten Ausgeben von Stückgut wie Paketen oder Päckchen aus einem Lager. Das Verfahren sieht die Überbringung einer Benachrichtigungskarte an einen Empfänger vor, wenn dieser an einer Empfängeradresse nicht anzutreffen ist. Dabei ist die Benachrichtigungskarte mit einer maschinenlesbaren ID-Nr. versehen und die gleiche ID-Nr. wird auf das Stückgut aufgebracht. Die ID-Nr. des Stückguts wird eingelesen und das Gut in ein automatisches Lager eingebracht. Das Paketlager kann sich beispielsweise bei einem Postamt befinden. Zur Abholung der Paketsendung steckt der Empfänger die Benachrichtigungskarte in eine dafür vorgesehene Öffnung und führt seinen Personalausweis an einem entsprechenden Ausweisleser vorbei. Die ID-Nr. der Benachrichtigungskarte wird eingelesen und mit gespeicherten ID-Nummern der eingelagerten Paketsendungen verglichen.

Befindet sich eine Sendung mit der betreffenden ID-Nr. in dem Lager, wird sie ausgegeben.

Aufgabe der Erfindung ist es, ein Verfahren zur Lieferung einer Sendung bereitzustellen, bei dem ein Empfänger eine Sendung für den Fall, dass ihm die Sendung an einer Zustelladresse nicht übergeben werden konnte, flexibel und komfortabel an einem Aufbewahrungsort abholen kann. Dabei sollen insbesondere die genannten Nachteile vermieden werden.

Aufgabe der Erfindung ist es ferner, eine Anordnung zur Durchführung des Verfahrens bereitzustellen. Mit der Anordnung soll insbesondere die Auslastung bekannter Paketfachanlagen erhöht werden.

Diese Aufgabe wird durch ein Verfahren gemäß Anspruch 1 gelöst. Die Aufgabe wird ferner durch eine Anordnung zur Durchführung des Verfahrens gemäß Anspruch 20 gelöst. Weitere vorteilhafte und zweckmäßige Ausgestaltungen ergeben sich aus den Unteransprüchen.

Erfindungsgemäß wird ein Verfahren zur Lieferung einer Sendung, bei dem die Sendung zu einer Zustelladresse transportiert wird, an der ein Benachrichtigungsmittel deponiert wird, falls festgestellt wird, dass keine Übergabe der Sendung an einen berechtigten Empfänger möglich ist, so durchgeführt, dass eine Zuordnung eines Beladungsplatzes einer Paketfachanlage zu dem Empfänger einer Sendung über ein gemein sames Identifikationsmittel erfolgt. Dabei wird das Benachrichtigungsmittel wenigstens mit Informationen zur Kennzeichnung der Paketfachanlage, Daten des Empfängers und mit dem Identifikationsmittel versehen.

Kann ein Zusteller eine Sendung nicht an einen berechtigten Empfänger übergeben, ordnet er den nicht angetroffenen Empfänger über ein Identifikationsmittel einem Beladungsplatz einer Paketfachanlage zu. Da der Empfänger seiner Sendung zugeordnet werden kann, erfolgt indirekt auch eine Zuordnung zwischen der Sendung und einem Beladungsplatz. Bei dem Beladungsplatz handelt es sich um ein freies Fach der betreffenden Paketfachanlage. Dabei kann eine feste Reservierung eines Faches erfolgen, so dass der Zusteller die Sendung an einer Paketfachanlage in das dem Empfänger zugeordnete Fach deponieren muss. In einem anderen bevorzugten Ausführungsbeispiel der Erfindung erfolgt keine feste Reservierung, sondern dem Identifikationsmittel wird lediglich ein potenziell freies Fach zugeordnet. Die endgültige Zuordnung zu einem bestimmten Fach erfolgt dabei erst an der Paketfachanlage.

Da für verschiedene Sendungen eine Nachweispflicht besteht, muss die Abholung bestätigt und der Abholer gegebenenfalls identifizierbar sein. Zur Bestätigung der Abholung wird daher erfindungsgemäß die Unterschrift des Abholers erfasst. Dies kann durch Einlesen der Unterschrift von bereits mit der Unterschrift versehenen Mitteln erfolgen. Zu diesen Mitteln zählen beispielsweise die Benachrichtigungskarte und/oder ein Personalausweis. Die Abholerdaten können ebenfalls von mit diesen Daten versehenen Mitteln erfasst werden.

Bei dem Identifikationsmittel kann es sich beispielsweise um einen Code oder RFID (radio frequency identification) handeln. Dabei kann die erste Zuordnung des Codes zu einem Beladungsplatz vor oder nach der Feststellung erfolgen, dass eine Sendung nicht übergeben werden konnte. Erfolgt sie vor der Feststellung, werden in einem besonders bevorzugten Ausführungsbeispiel der Erfindung vor der Zustelltour des Zustellers Benachrichtigungskarten für jedes verfügbare freie Fach im Zustellbezirk des Zustellers erzeugt. Auf diesen Benachrichtigungskarten werden jeweils Informationen zur Kennzeichnung der betreffenden Paketfachanlage und ein vergebener Code aufgebracht. Bei den Informationen zur Kennzeichnung einer Paketfachanlage handelt es sich vorzugsweise um Standortinformationen. Der Zusteller führt also auf seiner Tour für jedes ihm potenziell zur Verfügung stehende Fach eine Benachrichtigungskarte mit, auf welcher ein Code aufgebracht ist. Die anschließende Zuordnung des Faches zu dem Empfänger erfolgt vorzugsweise durch den Zusteller, welcher Daten des Empfängers auf der Benachrichtigungskarte anbringt, falls er feststellt, dass er eine Sendung nicht übergeben kann.

Erfolgt die Zuordnung nach der Feststellung, dass die Sendung nicht übergeben werden kann, werden dem Zusteller in einem weiteren besonders bevorzugten Ausführungsbeispiel der Erfindung an der Zustelladresse aktuelle Informationen über freie Fächer in seinem Zustellbezirk übermittelt. Die Übermittlung kann beispielsweise über eine tragbare Vorrichtung wie ein Handheld erfolgen, welches in Verbindung mit einer zentralen Datenverwaltungseinheit steht, welche Informationen über aktuelle Kapazitäten speichert und verwaltet. Eine Benachrichtigungskarte wird somit erst vor Ort mit den Standortinformationen einer Paketfachanlage versehen. Das Identifikationsmittel kann sich dabei bereits auf einer vorgefertigten Karte befinden oder ebenfalls erst im Zeitpunkt der Zustellung erzeugt und aufgebracht werden. Die Zuordnung zu einem Empfänger erfolgt auch in diesem Ausführungsbeispiel durch den Zusteller, welcher die entsprechenden Empfängerdaten auf der Karte anbringt.

Das erzeugte Benachrichtigungsmittel wird vom Zusteller an der Zustelladresse hinterlegt und die Sendung zu der Paketfachanlage transportiert, in welcher dem Empfänger der Sendung ein Fach zugeordnet wurde. Es hat sich als vorteilhaft erwiesen, dass die Zuordnung zu einem freien Fach keine Zuordnung zu einem festgelegten Fach der Paketfachanlage beinhaltet, sondern lediglich die Zuordnung zu einem von mehreren möglichen Fächern. Dies kann jedoch beispielsweise eine Zuordnung zu einer Gruppe von Fächern gleicher Größe einschließen.

Bei der Deponierung der Sendung durch den Zusteller wird wenigstens das dem Empfänger der Sendung zugeordnete Identifikationsmittel erfasst. Das Identifikationsmittel wird zu dem Fach gespeichert, in welchem die Sendung deponiert wurde. Für einen späteren Vergleich zwischen dem Abholer und dem eigentlichen Empfänger werden zweckmäßigerweise zusätzlich Empfängerdaten erfasst. Handelt es sich um eine Nachnahmesendung, wird außerdem ein damit verbundener Geldbetrag und Versendername erfasst. Die Entrichtung dieses Geldbetrages ist zweckmäßigerweise eine Bedingung für die Ausgabe der Sendung bei Abholung der Sendung durch einen Abholer.

Bei der Abholung der Sendung an der Paketfachanlage durch einen Abholer wird wenigstens das dem Empfänger zugeordnete Identifikationsmittel erfasst, welches sich auf dem Benachrichtigungsmittel befindet. Soll dazu ein Barcode eingescannt werden, muss der Abholer die Karte demnach mit zur Paketfachanlage bringen. Muss durch den Abholer beispielsweise nur ein Zahlen- oder Buchstabencode eingegeben werden, reicht es aus, wenn der Abholer diesen auswendig eingeben kann.

Nach der Erfassung des dem Empfänger zugeordneten Identifikationsmittels erfolgt ein Vergleich desselben mit den für die Fächer der Paketfachanlage gespeicherten Identifikationsmitteln. Ergibt das Ergebnis des Vergleiches, dass das dem Empfänger zugeordnete Identifikationsmittel mit einem der gespeicherten Identifikationsmittel übereinstimmt, erfolgt die Ausgabe der Sendung.

Handelt es sich bei der Sendung um eine Nachnahmesendung, kann eine Bedingung für die Ausgabe der Sendung sein, dass der Abholer vorher einen Geldbetrag entrichtet. Die Entrichtung des Geldbetrages kann beispielsweise über eine Kartenfunktion mit EC-Karten oder Bargeld erfolgen.

Eine weitere Bedingung für die Ausgabe einer Sendung kann die Übereinstimmung zwischen Empfänger und Abholer sein. Dazu ist es zweckmäßig, dass Abholerdaten erfasst werden. Stimmen diese mit den vom Zusteller eingegebenen Empfängerdaten überein, kann daraufhin eine Ausgabe der Sendung erfolgen. Im Falle der Nicht-Übereinstimmung von Empfängerdaten und Abholerdaten wird vorzugsweise eine Funktion aktiviert, über welche sich der Abholer als Ersatzempfänger angeben kann, was eine Bedingung für die Ausgabe der Sendung sein kann.

Da sich Empfänger- und Abholerdaten beispielsweise aufgrund von verschiedenen Schreibweisen oder Schreibfehlern unterscheiden können, so dass kein 100% positiver Abgleich möglich ist, sieht ein besonders bevorzugtes Ausführungsbeispiel der Erfindung vor, dass die Übereinstimmung der Daten nur einen bestimmten Grad erfüllen muss. Die Übereinstimmung lässt sich ferner auf einen Teil der Daten reduzieren, so dass beispielsweise nur die erfassten Nachnamen verglichen werden.

Die erfindungsgemäße Anordnung zur Durchführung eines Verfahrens zur Lieferung einer Sendung umfasst wenigstens eine zentrale Datenverwaltungseinheit und eine elektronische Paketfachanlage, die jeweils Mittel zum Datenaustausch aufweisen, wobei die Paketfachanlage wenigstens Mittel zur Erfassung, zur Speicherung und zum Vergleich von Identifikationsmitteln aufweist. Die Anordnung umfasst ferner wenigstens Mittel zur Erzeugung eines Identifikationsmittels, wobei das Identifikationsmittel der Zuordnung eines Empfängers einer Sendung zu einem Beladungsplatz einer Paketfachanlage der Anordnung dient. Zu der Anordnung gehören ferner Mittel zur Erzeugung von Informationen über Beladungsplätze einer Paketfachanlage, wobei die Informationen der Zuordnung eines Empfängers einer Sendung zu einem Beladungsplatz dienen. Zur Erzeugung eines Benachrichtigungsmittels sind ebenfalls Mittel vorgesehen, wobei das Benachrichtigungsmittel mit Daten zur Kennzeichnung einer Paketfachanlage, Daten des Empfängers und dem Identifikationsmittel versehbar ist. Erfindungsgemäß umfasst die Anordnung ferner Mittel zur Erfassung der Unterschrift des Abholers einer Sendung von einem mit der Unterschrift versehenen Mittel.

Das erfindungsgemäße Verfahren und die Anordnung zur Durchführung des Verfahrens weisen diverse Vorteile auf. Der Empfänger kann beispielsweise seine Sendung abholen, sobald sie vom Zusteller in einer Paketfachanlage deponiert wurde. Dies kann im günstigsten Fall sofort nach Erhalt der Benachrichtigungskarte sein. Dabei ist er völlig unabhängig von Öffnungszeiten einer Filiale, so dass er den Zeitpunkt der Abholung frei wählen kann. Dies stellt für ihn einen hohen Grad an ...

Flexibilität dar und Filialen eines Postunternehmens werden außerdem von Aufgaben wie der Paketausgabe entlastet.

Die Abholung erfordert ferner keine Registrierung, für welche der Nutzer persönliche Daten angeben muss. Für ein Postunternehmen stellt das Verfahren außerdem einen einfachen Weg dar, nicht-registrierte Empfänger in den Nutzen von Paketfachanlagen zu bringen, ohne dass umfangreiche Datenerfassungs- und Datenhaltungsmaßnahmen erforderlich sind. Dadurch lässt sich die Auslastung von Paketfachanlagen erhöhen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine schematische Darstellung der Abläufe bei dem erfindungsgemäßen Verfahrens; und
- Fig. 2: ein besonders bevorzugtes Ausführungsbeispiel eines Benachrichtigungsmittels.

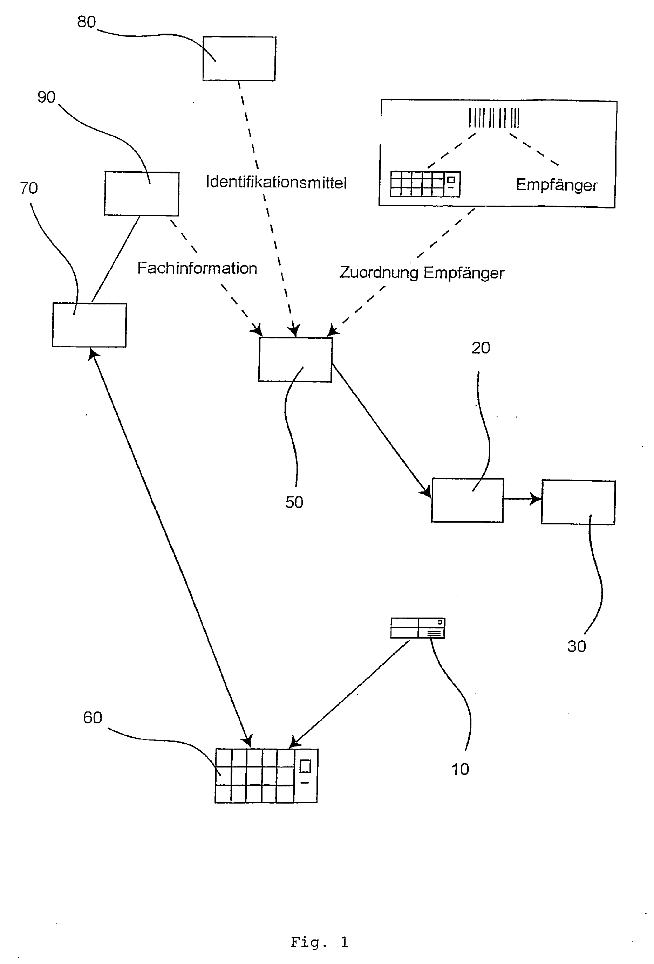

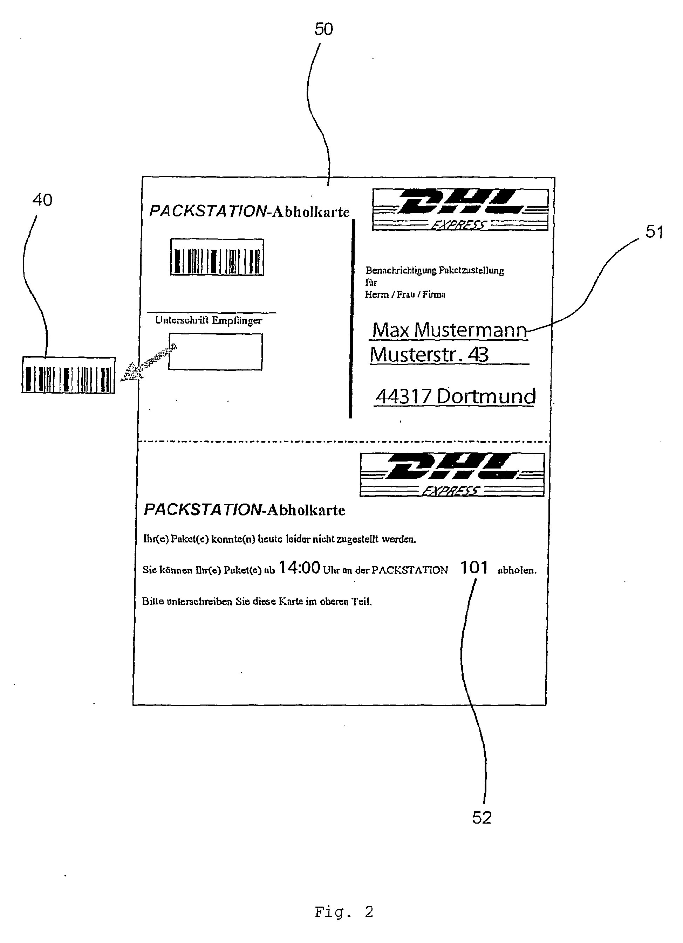

Fig. 1 zeigt eine schematische Darstellung der Abläufe bei dem erfindungsgemäßen Verfahren. Stellt ein Zusteller an einer Zustelladresse 20 fest, dass er eine Sendung 10 nicht an einen berechtigten Empfänger 30 übergeben kann, hinterlegt er an der Zustelladresse ein Benachrichtigungsmittel 50 und transportiert die Sendung zu einer Paketfachanlage 60. Bei dem Benachrichtigungsmittel 50 handelt es sich vorzugsweise um eine Benachrichtigungskarte, wie sie beispielhaft in Fig. 2 dargestellt ist. Das Benachrichtigungsmittel 50 ist wenigstens mit Informationen 52 zur Kennzeichnung einer Paketfachanlage mit freien Fächern, Daten 51 des Empfängers und einem Identifikationsmittel 40 versehen.

Das Identifikationsmittel wird in der erfindungsgemäßen Anordnung durch ein Mittel 80 erzeugt, während ein weiteres Mittel 90 Informationen über freie Fächer einer Paketfachanlage bereitstellt. Das Mittel 90 zur Erzeugung von Informationen über freie Fächer ist vorzugsweise mit einer zentralen Datenverwaltungseinheit 70 verbindbar, wobei die Datenverwaltungseinheit mit wenigstens einer Paketfachanlage der gesamten Anordnung verbindbar ist. Vorzugsweise werden Daten über alle Anlieferungs- und Abholvorgänge an einer Paketfachanlage der Datenverwaltungseinheit übermittelt, wo sie gespeichert werden. So verfügt die Datenverwaltungseinheit über aktuell verfügbare freie Fächer und kann diese Informationen beispielsweise einem Mittel 90 übergeben.

In einem besonders bevorzugten Ausführungsbeispiel der Erfindung erfolgt bei der Zuordnung eines Empfängers zu einem Beladungsplatz einer Paketfachanlage auch die Reservierung eines bestimmten Faches für die Sendung des Empfängers. Dies kann beispielsweise über ein mobiles Gerät geschehen, welches der Empfänger mit sich führt, so dass er die Reservierung eines Faches an ein zuständiges Mittel übermitteln kann. Dabei kann es sich beispielsweise direkt um die betreffende Paketfachanlage oder die zentrale Datenverwaltungseinheit handeln, welche die Information dann an die Paketfachanlage weitergibt.

In einem weiteren besonders bevorzugten Ausführungsbeispiel der Erfindung erfolgt bei der Zuordnung eines Empfängers zu einem Beladungsplatz einer Paketfachanlage noch keine Reservierung eines bestimmten Faches, sondern die endgültige Belegung wird erst durchgeführt, wenn der Zusteller eine Sendung an einer Paketfachanlage einstellen möchte.

Die Zuordnung eines freien Faches zu einem Empfänger über ein Identifikationsmittel erfolgt durch den Zusteller. Die Zuordnung fließt in die Erzeugung des Benachrichtigungsmittels ein. Dabei kann das Benachrichtigungsmittel auf verschiedene Arten erzeugt werden.

In einem besonders bevorzugten Ausführungsbeispiel der Erfindung wird vor der Zustelltour eines Zustellers für jedes verfügbare Fach im Bereich der Zustelltour ein Benachrichtigungsmittel erstellt. Dies geschieht beispielsweise dadurch, dass in einer Zustellbasis über eine Anwendung eine Benachrichtigungskarte gedruckt wird. In diesem Fall befinden sich sowohl das Mittel 80 zur Erzeugung eines Identifikationsmittels 40 und das Mittel zur Erzeugung von Informationen über freie Fächer im Bereich der Zustellbasis.

Zweckmäßigerweise handelt es sich bei dem Identifikationsmittel um einen Barcode. Als besonders vorteilhaft hat es sich erwiesen, dass sich das Identifikationsmittel in 2-facher Ausführung auf der Benachrichtigungskarte befindet. Beispielsweise kann der Code einmal direkt auf die Karte und einmal auf einen abziehbaren Aufkleber gedruckt sein. Der Zusteller kann so den Aufkleber abziehen und auf die Sendung aufbringen, welche er benachrichtigt. Dies hat den Vorteil der Zuordnung nicht nur des Empfängers sondern auch der Sendung zu dem vergebenen Code.

Eine derartige Benachrichtigungskarte kann ferner Standortinformationen einer Paketfachanlage und/oder eine Fachgrößenangabe aufweisen. Der Zusteller kann so für jedes verfügbare Fach im Bereich der Zustelltour eine Karte mit auf die Tour nehmen. Der Zusteller verfügt also bereits vor der Zustelltour über Informationen über die Anzahl und Größe freier Fächer, was die Kapazitätsplanung erleichtert. Der Zusteller kennt also das aktuelle Fachkontingent und vergibt Fächer nicht doppelt.

Erreicht nun ein Zusteller die Zustelladresse eines Empfängers, trifft den Empfänger oder einen berechtigten Ersatzempfänger aber nicht an, so hinterlässt er eine der mitgeführten Benachrichtigungskarten an dieser Zustelladresse. Er wählt dazu eine Benachrichtigungskarte aus, auf welcher die nächstliegende Paketfachanlage vermerkt ist, welche über ein freies Fach der geeigneten Größe verfügt. Der Zusteller trägt bestimmte Personendaten des Empfängers auf der Karte ein und löst das aufgeklebte Identifikationsmittel von der Benachrichtigungskarte ab. Das abgelöste Identifikationsmittel bringt er vorzugsweise auf der auszuliefernden Sendung an. In einem besonders bevorzugten Ausführungsbeispiel der Erfindung vermerkt der Zusteller auf der Benachrichtigungskarte weitere Informationen wie beispielsweise einen bei Abholung zu entrichtenden Nachnahmebetrag und/oder den frühstmöglichen Termin zur Abholung der Sendung.

Wird kein zweifaches Identifikationsmittel zum Ablösen verwendet, können andere Arten der Erfassung und Übertragung der vergebenen Identifikation zum Einsatz kommen. Der Zusteller kann sich beispielsweise das Identifikationsmittel der Benachrichtigungskarte notieren und/oder es manuell auf die Sendung aufbringen. Er schreibt dabei zum Beispiel einen Nummern- oder Buchstabencode auf die Sendung.

In einem weiteren besonders bevorzugten Ausführungsbeispiel der Erfindung erfolgt die Erzeugung von Benachrichtigungskarten nicht im Vorfeld einer Zustelltour, sondern der Zusteller kann bei Bedarf an einer Zustelladresse ein Benachrichtigungsmittel erzeugen. Dazu kann er beispielsweise über eine tragbare Vorrichtung wie ein Handheld verfügen, welches Verbindung mit der zentralen Datenverwaltungseinheit 70 hat. Bei dieser Verbindung kann es sich beispielsweise um eine Funkverbindung oder eine GSM-Verbindung handeln. Das Mittel 90 zur Erzeugung von Informationen über freie Fächer würde sich demnach in der tragbaren Vorrichtung befinden und freie Fächer anzeigen und/oder auf ein Benachrichtigungsmittel aufbringen. Der Zusteller verfügt so immer über aktuelle Kapazitäten von Paketfachanlagen. Auch das Mittel 80 zur Erzeugung von Identifikationsmitteln kann sich in der tragbaren Vorrichtung befinden, so dass beispielsweise vor Ort ein erforderlicher Code erzeugt wird. In einem weiteren Ausführungsbeispiel der Erfindung führt der Zusteller vorgefertigte Benachrichtigungskarten mit sich, welche bereits mit einem Code versehen sind und lediglich durch Empfänger- und Paketfachanlagendaten ergänzt werden.

Dieses Verfahren hat den Vorteil, dass der Zusteller keine Benachrichtigungskarten für sämtliche freie Fächer von Paketfachanlagen mit sich führen muss, welche nach Nichtbenutzen innerhalb einer Zustelltour nicht weiterverwendet werden können, da sich die Kapazitäten bei der nächsten Zustelltour bereits geändert haben. Ferner ist es vorteilhaft, dass dem Zusteller über die zentrale Datenverwaltungseinheit immer die aktuelle Auslastung der Paketfachanlagen zur Verfügung steht, wobei er auch Informationen über Paketfachanlagen außerhalb seines Zustellbezirkes anfordern kann.

Die Deponierung von Sendungen, über welche ein Empfänger wie beschrieben benachrichtigt wurde, kann abhängig von der Vorgangsart verschiedene Varianten umfassen. Bei der einfachsten Variante handelt es sich beispielsweise um eine nicht nachweispflichtige Sendung. Der Zusteller meldet sich an der Paketfachanlage an, was auf bekannte Weise beispielsweise über eine Identifikationskarte und/oder einen Pincode erfolgen kann. Danach wählt er über eine elektronische Steuerung der Paketfachanlage die Option der Einlieferung einer benachrichtigten Sendung aus. Wird als Identifikationsmittel ein Barcode verwendet, scannt der Zusteller diesen auf der betreffenden Sendung ein. Der Zusteller wählt eine benötigte Fachgröße, und stellt die Sendung in ein Fach ein. Das Fach wird geschlossen und die Einlieferung ist beendet. Die erfassten Daten werden an die zentrale Datenverwaltungseinheit 70, bei der es sich beispielsweise um einen Server handelt, übermittelt.

Handelt es sich bei der einzuliefernden Sendung um eine Nachnahmesendung, für welche der Empfänger bei Empfang einen Geldbetrag zu entrichten hat, kommt zweckmäßigerweise eine weitere Ausführungsform der Erfindung zur Anwendung, da zusätzlich ein Nachnahmebetrag erfasst werden muss. Die Identifikation und die Erfassung des Identifikationsmittels kann beispielsweise beibehalten werden, wobei der Zusteller vorher eine spezielle Option "Nachnahmeeinlieferung" gewählt haben kann. Der Zusteller kann so den Nachnahmebetrag und vorzugsweise auch den Namen des Versenders eingeben. Die weiteren Schritte des Einlieferungsprozesses können denen bei nicht nachweispflichtiger Sendung entsprechen. Zusätzlich kann der Zusteller einen sendungsbezogenen Identifikationscode erfassen, welcher sich beispielsweise ebenfalls als Aufkleber auf der Sendung befindet.

Die Abholung benachrichtigter Sendungen aus einer Paketfachanlage stellt die vereinfachte Abholung in einer Filiale eines Zustellunternehmens dar und erfolgt ebenfalls abhängig von der Vorgangsart. Dabei ist eine Identifikation des Abholers zu realisieren, die vorzugsweise den Erfordernissen bei der Abholung in der Filiale entsprechen sollte. So soll vermieden werden, dass eine Person unberechtigt in den Besitz einer Benachrichtigungskarte kommt und unberechtigt eine Sendung aus einer Paketfachanlage erhält. Zumindest soll ein Abholer soweit identifizierbar sein, dass er bei unberechtigter Abholung festgestellt werden kann. An die Identifikation des Abholers bei einer nicht nachweispflichtigen Sendung sind daher andere Anforderungen zu stellen als an die Identifikation bei einer nachweispflichtigen Sendung. Die jeweiligen Prozesse an einer Paketfachanlage unterscheiden sich also zweckmäßigerweise.

Die einfachste Variante stellt auch hier die Abholung einer nicht nachweispflichtigen Sendung durch einen benachrichtigten Empfänger oder eine berechtigte Ersatzperson dar. Der Empfänger oder eine berechtigte Ersatzperson begeben sich zu einer Paketfachanlage und führen eine Benachrichtigungskarte mit sich. Da eine Paketfachanlage auch für andere Vorgangsarten einsetzbar ist, hat es sich als zweckmäßig erwiesen, für das erfindungsgemäße Verfahren einen speziellen Menüpunkt in einer elektronischen Steuerung der Paketfachanlage vorzusehen. Der Abholer wählt somit den entsprechenden Menüpunkt aus und wird daraufhin beispielsweise aufgefordert, das Identifikationsmittel der Benachrichtigungskarte zu erfassen. Je nach Identifikationsmittel kann der Empfänger den Barcode einscannen oder einen Code über ein Eingabemittel eingeben. Die Paketfachanlage ordnet dem Identifikationsmittel daraufhin eine deponierte Sendung zu und gibt diese aus.

Zur Abholung von nicht nachweispflichtigen Sendungen in einer Filiale eines Postunternehmens genügt zur Bestätigung der Abholung beispielsweise die Unterschrift des Abholers. Um dies in einer Paketfachanlage abzubilden, wird der Abholer dazu aufgefordert, ebenfalls seine Unterschrift abzugeben. In einem besonders bevorzugten Ausführungsbeispiel der Erfindung unterschreibt der Abholer die Benachrichtigungskarte und übergibt diese der Paketfachanlage. Dies kann beispielsweise durch das Einlegen in ein Fach erfolgen. Das Einlegen in ein Fach hat den Vorteil, dass sowohl das Identifikationsmittel als auch der Barcode direkt von der Benachrichtigungskarte eingelesen werden können, wobei gleichzeitig weitere Informationen wie die Unterschrift fotographiert werden können.

Da handschriftliche Texte auf der Benachrichtigungskarte fehlerhaft oder unleserlich sein können, kann es ferner zweckmäßig sein, die Identität des Abholers eindeutig lesbar zu erfassen, indem er seine Personendaten über eine Tastatur eingibt. Dabei ist zu beachten, dass es sich dabei auch um unrichtige Angaben handeln kann, so dass nicht sicher festgestellt werden kann, ob es sich um einen berechtigten Abholer handelt. Bei nicht nachweispflichtigen Sendungen ist ein Nachweis der Auslieferung an den Empfänger jedoch nicht notwendig. Falls ein Nachweis dennoch zweckmäßig ist, kann dies an dieser Stelle durchgeführt werden.

Nach der Bestätigung durch die Unterschrift oder weiterer Identitätsangaben, wird die Sendung zur Entnahme freigegeben. Der Empfänger entnimmt die Sendung und schließt das Fach. Die Paketfachanlage sendet daraufhin zweckmäßigerweise eine Nachricht über das Ereignis an die zentrale Datenverwaltungseinheit.

Wurde eine nachweispflichtige Nachnahmesendung in eine Paketfachanlage eingebracht, hat sich bei der Abholung ein anderer Prozess als zweckmäßig erwiesen. Möchte ein Empfänger eine nachweispflichtige Nachnahmesendung, für welche er eine Benachrichtigungskarte erhalten hat, an einer Paketfachanlage abholen, begibt er sich zu der entsprechenden Paketfachanlage, wobei er die Benachrichtigungskarte und eine Geldkarte mitführen muss, welche von der Paketfachanlage akzeptiert wird. In einer anderen Ausführungsform der Erfindung besteht für den Abholer die Möglichkeit der Entrichtung eines Geldbetrags durch Barzahlung.

Nach der Wahl eines Menüpunktes für Nachnahmesendungen kann eine Erfassung des Identifikationsmittels der abzuholenden Sendung erfolgen, wie es bereits beschrieben wurde. Die Paketfachanlage ordnet die Sendung zu und zeigt in einem besonders bevorzugten Ausführungsbeispiel den zu entrichtenden Nachnahmebetrag und den Versender an. Daraufhin wird der Kunde aufgefordert, die Sendung per Geldkarte zu bezahlen. Dabei kann beispielsweise die Eingabe einer PIN gefordert werden. Nach erfolgreicher Bezahlung wird der Empfänger vorzugsweise dazu aufgefordert, auf einem Touchscreen zu unterschreiben. Nach einer Bestätigung der Unterschrift, wird die Sendung zur Entnahme freigegeben. In einem besonders bevorzugten Ausführungsbeispiel der Erfindung wird eine Quittung über die Bezahlung der Sendung gedruckt. Der Empfänger entnimmt die Quittung und die Sendung und schließt das Fach. Die Paketfachanlage sendet eine entsprechende Nachricht über die Entnahme an die zentrale Datenverwaltung.

Als Geldkarte können beispielsweise EC-Karten und/oder Kreditkarten eingesetzt werden. Besteht die Möglichkeit, aus einer Geldkarte die Identität des Abholers zu ermitteln, ist dies besonders vorteilhaft, da dadurch von einem Mittel zwei Funktionen erfüllt werden. Ist die Identität des Abholers durch die Geldkarte nicht erfassbar, können andere Verfahren zur Anwendung kommen.

Beispielsweise kann die Identifizierung des Abholers an der Paketfachanlage über die Benachrichtigungskarte und den Personalausweis erfolgen. Der Paketempfänger hat dazu die Benachrichtigungskarte mit dem aufgedruckten Benachrichtigungscode und der Packstation erhalten und unterschrieben. Er hat sich zur angegebenen Paketfachanlage begeben und führt die Benachrichtigungskarte und seinen Personalausweis mit sich. Der Benutzer wählt über einen Menüpunkt aus, dass er ein benachrichtigtes Paket entnehmen möchte. An der Paketfachanlage öffnet sich daraufhin ein Scannerfach. Der Paketempfänger wird aufgefordert, die unterschriebene Benachrichtigungskarte einzulegen. Das Fach schließt sich und der Benachrichtigungscode wird von der Karte gelesen. Ferner wird die Unterschrift fotographiert und die Karte wird wieder ausgegeben.

Nach erfolgreicher Prüfung des Benachrichtigungscodes wird der Paketempfänger aufgefordert, sich mit seinem Personalausweis zu identifizieren und diesen in das Scannerfach einzulegen. Aus dem Personalausweis können beispielsweise verschiedene Daten ausgelesen werden. Dazu zählen vorzugsweise Vor- und Nachname, Adresse, Ausweisnummer und zusätzlich die Unterschrift. Nachdem die Daten ausgelesen wurden, wird der Ausweis wieder ausgegeben und kann vom Empfänger entnommen werden.

Ist der Abgleich von Namen und Adresse auf dem Paket und dem Ausweis erfolgreich, wird das entsprechende Fach geöffnet und der Kunde kann sein Paket entnehmen. War der Abgleich nicht erfolgreich, kann zweckmäßigerweise über die Menüführung abgefragt werden, ob der Abholer vom Empfänger zur Abholung ermächtigt ist. Wird dies bejaht, könnte das Paket auch ausgegeben werden, da die Ausweisdaten des Abholers im Falle eines unberechtigten Abholens vorliegen. Da im Falle von fehlerhaft eingegebenen Namen oder Anschriften vom Absender kein positiver Abgleich zwischen den angegebenen Daten und den von dem Personalausweis eingelesenen korrekten Daten erfolgen kann, kann für diesen Fall eine Ersatzfunktion vorgesehen sein, so dass der Empfänger in jedem Fall seine Sendung erhält. Dies kann beispielsweise über die gleiche Funktion erfolgen, welche die Abholung durch einen Ersatzempfänger abwickelt. Alle erfassten Daten werden gespeichert, so dass im Schadensfall bzw. im Recherchefall die Identität des Abholers nachvollzogen werden kann.

In einem anderen bevorzugten Ausführungsbeispiel der Erfindung wird beim Abgleich ein Übereinstimmungsgrad zwischen den Daten des angegebenen Empfängers und den Daten des Abholers festgelegt. Der Übereinstimmungsgrad könnte beispielsweise 70% betragen, so dass geringe Abweichungen durch unterschiedliche Schreibweisen oder Rechtschreibfehler nicht zur Verweigerung einer Sendung führen. In einer weiteren Ausführungsform wird beispielsweise nur der Nachname eines Abholers bewertet. Ergibt keiner der Prozesse eine ausreichende Übereinstimmung, wird die Ausgabe des Paketes verweigert.

Die Identifizierung über einen Personalausweis hat den Vorteil, dass es für den Benutzer sehr einfach durchzuführen ist, da er lediglich seinen Ausweis einlegen muss. Gleichzeitig ist für den Betreiber der Paketfachanlage eine hohe Sicherheit gewährleistet, da nicht nur Name und Adresse des Abholers und des Empfängers bekannt sind, sondern der Abholer im Schadensfall eindeutig über seine Personalausweisnummer identifiziert werden kann.

In einem weiteren besonders bevorzugten Ausführungsbeispiel der Erfindung erfolgt die Identifizierung des Abholers über die Vorlage einer beliebigen Ausweiskarte, die den Namen enthält. Dabei kann es sich beispielsweise um eine Krankenkassenkarte oder einen Führerschein handeln. Ist die Identität des Benutzers auf der Karte gespeichert, kann diese durch die Paketfachanlage ausgelesen werden. Ist dies nicht der Fall oder ist ein Auslesen der Identität nicht erlaubt, kann der Benutzer beispielsweise dazu aufgefordert werden, die unterschriebene Karte in ein Fach der Paketfachanlage einzulegen. Das Fach wird geschlossen und die Karte von beiden Seiten abgescannt. Der Abholer kann zusätzlich dazu aufgefordert werden, auf einem Unterschriften-Pad zu unterschreiben. Danach kann er seine Karte und das Paket entnehmen.

In einem weiteren besonders bevorzugten Ausführungsbeispiel der Erfindung übergibt der Versender dem Empfänger und dem zustellenden Postunternehmen mit einer sendungsbegleitenden Information eine hauseigene Kundennummer oder eine TAN, die der Empfänger zusätzlich zum Benachrichtigungscode an der Paketfachanlage eingeben muss, um die Sendung zu entnehmen. Dieses Verfahren sichert den Nachweis, dass Empfänger und Abholer eine Person sind. Zusätzlich kann bei Bedarf noch die Unterschrift des Abholers eingefordert werden.

Als weiteres Mittel zur Sicherung der Identität des Abholers kann bei der Abholung ein Foto des Abholers erzeugt werden. In einem weiteren Ausführungsbeispiel erfolgt die Identifikation über einen Anruf eines Mobiltelefons inklusive Rufnummernübertragung an einer bestimmten Nummer des Paketfachanlagen-Systems. Über den Kartenvertrag des Mobilfunktelefons kann so der Inhaber des Telefons verifiziert werden.

### Bezugszeichenliste:

- 10: Sendung
- 20: Zustelladresse
- 30: Empfänger
- 40: Identifikationsmittel, Barcode
- 50: Benachrichtigungsmittel, Benachrichtigungskarte
- 51: Empfängerdaten
- 52: Daten zur Kennzeichnung einer Paketfachanlage
- 60: Paketfachanlage
- 70: Zentrale Datenverwaltungseinheit, Server
- 80: Mittel zur Erzeugung eines Identifikationsmittels
- 90: Mittel zur Erzeugung von Informationen über freie Fächer einer Paketfachanlage

## Patentansprüche

1. Verfahren zur Lieferung einer Sendung (10), bei dem die Sendung zu einer Zustelladresse (20) transportiert wird, an der ein Benachrichtigungsmittel (50) deponiert wird, falls festgestellt wird, dass keine Übergabe der Sendung (10) an einen berechtigten Empfänger (30) möglich ist, wobei das Benachrichtigungsmittel (50) wenigstens mit Daten zur Kennzeichnung der Paketfachanlage (60), Daten des Empfängers (30) und dem Identifikationsmittel (40) versehen wird, und eine Deponierung der Sendung (10) in einem Fach einer elektronischen Paketfachanlage (60) erfolgt, wobei wenigstens das dem Empfänger (30) der Sendung (10) zugeordnete Identifikationsmittel (40) erfasst und zu dem betreffenden Fach gespeichert wird,
**gekennzeichnet,**
**durch** folgende Schritte:
- Zuordnung eines Beladungsplatzes einer Paketfachanlage (60) zu einem Empfänger (30) der Sendung (10) durch ein Identifikationsmittel (40);
- Abholung der Sendung (10) an der Paketfachanlage (60) durch einen Abholer, wobei
- wenigstens das dem Empfänger (30) der Sendung (10) zugeordnete Identifikationsmittel (40) erfasst wird,
- ein Vergleich des dem Empfänger (30) der Sendung (10) zugeordneten Identifikationsmittels (40) mit den für belegte Fächer gespeicherten Identifikationsmitteln erfolgt,
- die Unterschrift des Abholers erfasst wird, wobei die Unterschrift von einem mit der Unterschrift versehenen Mittel erfasst wird, und
- die Ausgabe der deponierten Sendung (10) aus einem Fach erfolgt, falls das Ergebnis des Vergleiches ergibt, dass das dem Empfänger zugeordnete Identifikationsmittel (40) mit einem zu dem betreffenden Fach gespeicherten Identifikationsmittel übereinstimmt.

2. Verfahren nach Anspruch 1,
**dadurch gekennzeichnet,**
**dass** bei der Deponierung der Sendung (10) in einer Paketfachanlage (60) und/oder bei der Abholung der Sendung (10) aus der Paketfachanlage (60) Daten über den jeweiligen Vorgang an eine zentrale Datenverwaltungseinheit (70) übermittelt werden.

3. Verfahren nach einem oder beiden der Ansprüche 1 und 2,
**dadurch gekennzeichnet,**
**dass** bei der Deponierung der Sendung (10) in einer Paketfachanlage (60) ein Geldbetrag erfasst wird, und
**dass** die Entrichtung dieses Geldbetrages eine Bedingung für die Ausgabe der Sendung (10) bei Abholung der Sendung durch einen Abholer ist.

4. Verfahren nach Anspruch 3,
**dadurch gekennzeichnet,**
**dass** die Entrichtung des Geldbetrages an der Paketfachanlage (60) über eine Kartenfunktion erfolgt.

5. Verfahren nach Anspruch 4,
**dadurch gekennzeichnet,**
**dass** es sich bei den für die Kartenfunktion einsetzbaren Karten um EC-Karten, Kreditkarten und/oder Geldkarten handelt.

6. Verfahren nach Anspruch 3,
**dadurch gekennzeichnet,**
**dass** die Entrichtung des Geldbetrages an der Paketfachanlage (60) über Bargeld erfolgt.

7. Verfahren nach einem oder mehreren der vorangegangenen Ansprüche,
**dadurch gekennzeichnet,**
**dass** bei der Deponierung der Sendung (10) und bei der Abholung der Sendung (10) durch einen Abholer Daten des Empfängers (30) erfasst werden, und dass die Übereinstimmung dieser Empfängerdaten eine Bedingung für die Ausgabe der Sendung (10) bei Abholung der Sendung durch einen Abholer ist.

8. Verfahren nach einem oder mehreren der vorangegangenen Ansprüche,
**dadurch gekennzeichnet,**
**dass** bei der Deponierung der Sendung (10) Daten des Empfängers erfasst werden und bei der Abholung der Sendung (10) durch einen Abholer Daten des Abholers erfasst werden, und dass die Übereinstimmung dieser Daten eine Bedingung für die Ausgabe der Sendung (10) bei Abholung der Sendung durch einen Abholer ist.

9. Verfahren nach Anspruch 8,
**dadurch gekennzeichnet,**
**dass** im Falle der Nicht-Übereinstimmung von Empfängerdaten und Abholerdaten eine Funktion aktiviert wird, über welche sich der Abholer als Ersatzempfänger angeben kann, was eine Bedingung für die Ausgabe der Sendung (10) ist.

10. Verfahren nach einem oder mehreren der Ansprüche 7 bis 9,
**dadurch gekennzeichnet,**
**dass** zur Erfüllung der Bedingung zur Ausgabe der Sendung ein festgelegter Grad der Übereinstimmung der Daten erforderlich ist.

11. Verfahren nach einem oder mehreren der Ansprüche 7 bis 10,
**dadurch gekennzeichnet,**
**dass** zur Erfüllung der Bedingung zur Ausgabe der Sendung eine Übereinstimmung eines Teils der Daten erforderlich ist.

12. Verfahren nach Anspruch 1,
**dadurch gekennzeichnet,**
**dass** es sich bei dem mit der Unterschrift versehenen Mittel um das Benachrichtigungsmittel (50) handelt.

13. Verfahren nach Anspruch 1,
**dadurch gekennzeichnet,**
**dass** es sich bei dem mit der Unterschrift versehenen Mittel um einen Personalausweis handelt.

14. Verfahren nach einem oder beiden der Ansprüche 7 und 8,
**dadurch gekennzeichnet,**
**dass** die Erfassung von Empfängerdaten und/oder Abholerdaten bei der Abholung einer Sendung (10) über eine Eingabe durch den Abholer erfolgt.

15. Verfahrens nach Anspruch 14,
**dadurch gekennzeichnet,**
**dass** die Erfassung von Empfängerdaten und/oder Abholerdaten bei der Abholung der Sendung (10) durch das Einlesen von mit den jeweiligen Daten versehenen Mitteln erfolgt.

16. Verfahren nach Anspruch 15,
**dadurch gekennzeichnet,**
**dass** es sich bei den mit den jeweiligen Daten versehenen Mitteln um ein Benachrichtigungsmittel (50), einen Personalausweis, eine EC-Karte, eine Kreditkarte und/oder eine Geldkarte handelt.

17. Verfahren nach einem oder mehreren der vorangegangenen Ansprüche,
**dadurch gekennzeichnet,**
**dass** die Zuordnung eines Identifikationsmittels (40) zu einem Beladungsplatz einer Paketfachanlage (60) vor der Feststellung erfolgt, dass an der Zustelladresse (20) keine Übergabe der Sendung (10) an einen berechtigten Empfänger (30) möglich ist.

18. Verfahren nach einem oder mehreren der vorangegangenen Ansprüche 1 bis 16,
**dadurch gekennzeichnet,**
**dass** die Zuordnung eines Identifikationsmittels (40) zu einem Beladungsplatz einer Paketfachanlage (60) nach der Feststellung erfolgt, dass an der Zustelladresse (20) keine Übergabe der Sendung (10) an einen berechtigten Empfänger (30) möglich ist.

19. Verfahren nach einem oder mehreren der vorangegangenen Ansprüche,
**dadurch gekennzeichnet,**
**dass** mit der Zuordnung eines Empfängers (30) zu einem Beladungsplatz einer Paketfachanlage (60) durch ein Identifikationsmittel (40) die Reservierung eines Faches der betreffenden Paketfachanlage (60) erfolgt.

20. Anordnung zur Durchführung eines Verfahrens zur Lieferung einer Sendung (10) nach einem oder mehreren der Ansprüche 1 bis 19, wobei die Anordnung wenigstens eine zentrale Datenverwaltungseinheit (70) und eine elektronische Paketfachanlage (60) umfasst, die jeweils Mittel zum Datenaustausch aufweisen, und dass die Paketfachanlage (60) wenigstens Mittel zur Erfassung, zur Speicherung und zum Vergleich von Identifikationsmitteln (40) aufweist, und die Anordnung Mittel (80) zur Erzeugung eines Identifikationsmittels (40) aufweist, wobei das Identifikationsmittel (40) der Zuordnung eines Empfängers (30) einer Sendung (10) zu einem Beladungsplatz einer Paketfachanlage (60) der Anordnung dient, und die Anordnung Mittel zur Erzeugung eines Benachrichtigungsmittels (50) aufweist, wobei das Benachrichtigungsmittel (50) mit Daten zur Kennzeichnung einer Paketfachanlage (60), Daten des Empfängers (30) und dem Identifikationsmittel (40) versehbar ist,
**dadurch gekennzeichnet,**
**dass** die Anordnung wenigstens folgende Komponenten umfasst:
- Mittel (90) zur Erzeugung von Informationen über Beladungsplätze einer Paketfachanlage (60), wobei die Informationen der Zuordnung eines Empfängers (30) einer Sendung (10) zu einem Beladungsplatz dienen; und
- Erfassungsmittel zur Erfassung der Unterschrift des Abholers einer Sendung (10) von einem mit der Unterschrift versehenen Mittel, wobei sich die Erfassungsmittel an einer Paketfachanlage (60) befinden.

21. Anordnung nach Anspruch 20,
**dadurch gekennzeichnet,**
**dass** die Anordnung Mittel zur Erfassung der Unterschrift des Abholers einer Sendung (10) von dem Benachrichtigungsmittel (50) oder einem Personalausweis aufweist.

22. Anordnung nach Anspruch 20,
**dadurch gekennzeichnet,**
**dass** das Mittel (90) zur Erzeugung von Informationen über Beladungsplätze einer Paketfachanlage (60) mit der zentralen Datenverwaltungseinheit (70) verbindbar ist.

23. Anordnung nach einem oder beiden der Ansprüche 20 und 22,
**dadurch gekennzeichnet,**
**dass** das Mittel (90) zur Erzeugung von Informationen über Beladungsplätze einer Paketfachanlage (60) eine mobile Vorrichtung ist.

24. Anordnung nach einem oder mehreren der Ansprüche 20 bis 23,
**dadurch gekennzeichnet,**
**dass** das Identifikationsmittel (40) aus einem Barcode, Ziffern- und/oder Buchstabencode besteht.

25. Anordnung nach einem oder mehreren der Ansprüche 20 bis 23,
**dadurch gekennzeichnet,**
**dass** das Benachrichtigungsmittel (50) mit zwei identischen Identifikationsmitteln (40) versehen ist, wobei wenigstens ein Identifikationsmittel (40) von dem Benachrichtigungsmittel (50) lösbar ist.

## Claims

1. A method for delivering a shipment (10), wherein the shipment is transported to a delivery address (20) at which a notification means (50) is deposited if it is determined that the shipment (10) cannot be handed over to an authorized recipient (30), whereby the notification means (50) is provided at least with data for identifying the parcel compartment facility (60), with data about the recipient (30) and with the identification means (40), and the shipment (10) is deposited in a compartment of an electronic parcel compartment facility (60), whereby at least the identification means (40) associated with the recipient (30) of the shipment (10) is recorded and stored so as to match the compartment in question,
**characterized by**
the following steps:
- association of a storage place in a parcel compartment facility (60) with a recipient (30) of the shipment (10) via an identification means (40),
- pick-up of the shipment (10) at the parcel compartment facility (60) by a person picking up the shipment, whereby
- at least the identification means (40) associated with the recipient (30) of the shipment (10) is recorded,
- a comparison is made between the identification means (40) associated with the recipient (30) of the shipment (10) and the identification means stored for occupied compartments,
- the signature of the person picking up the shipment is recorded, whereby the signature is recorded by a means that has been provided with the signature, and
- the deposited shipment (10) is released from a compartment if the result of the comparison shows that the identification means (40) associated with the recipient matches one of the identification means stored for the compartment in question.

2. The method according to Claim 1,
**characterized in that,**
when the shipment (10) is deposited in a parcel compartment facility (60) and/or when the shipment (10) is picked up from the parcel compartment facility (60), data about the procedure in question is transmitted to a central data management unit (70).

3. The method according to one or both of Claims 1 and 2,
**characterized in that,**
when the shipment (10) is deposited in a parcel compartment facility (60), a monetary sum is recorded, and **in that** the payment of this monetary sum is a prerequisite for the release of the shipment (10) when someone picks up the shipment.

4. The method according to Claim 3,
**characterized in that**
the monetary sum is paid at the parcel compartment facility (60) via a card function.

5. The method according to Claim 4,
**characterized in that**
the cards that can be used for the card function are EC cards, credit cards and/or pre-paid cards.

6. The method according to Claim 3,
**characterized in that**
the monetary sum is paid at the parcel compartment facility (60) in cash.

7. The method according to one or more of the preceding claims,
**characterized in that,**
when the shipment (10) is deposited and when a person picks up the shipment (10), data about the recipient (30) is recorded, and **in that** a match of this recipient data is a prerequisite for the release of the shipment (10) when someone picks up the shipment.

8. The method according to one or more of the preceding claims,
**characterized in that,**
when the shipment (10) is deposited, data about the recipient is recorded and when someone picks up the shipment (10), data about the person picking up the shipment is recorded, and **in that** a match of this data is a prerequisite for the release of the shipment (10) when a person picks up the shipment.

9. The method according to Claim 8,
**characterized in that,**
if the data about the recipient and the data about the person picking up the shipment do not match, then a function is activated by means of which the person picking up the shipment can indicate that he is the substitute recipient, which is a prerequisite for the release of the shipment (10).

10. The method according to one or more of Claims 7 to 9,
**characterized in that,**
in order to meet the prerequisite for releasing the shipment, the data has to match to a predefined degree.

11. The method according to one or more of Claims 7 to 10,
**characterized in that,**
in order to meet the prerequisite for releasing the shipment, part of the data has to match.

12. The method according to Claim 1,
**characterized in that**
the means provided with the signature is the notification means (50).

13. The method according to Claim 1,
**characterized in that**
the means provided with the signature is a personal identity card.

14. The method according to one or both of Claims 7 and 8,
**characterized in that**
the data about the recipient and/or the data about the person picking up the shipment is recorded via an input by the person picking up the shipment when the shipment (10) is picked up.

15. The method according to Claim 14,
**characterized in that**
the data about the recipient and/or the data about the person picking up the shipment is recorded by the reading in of the means provided with the appertaining data when the shipment (10) is picked up.

16. The method according to Claim 15,
**characterized in that**
the means provided with the appertaining data is a notification means (50), a personal identity card, an EC card, a credit card and/or a pre-paid card.

17. The method according to one or more of the preceding claims,
**characterized in that**
the association of an identification means (40) with a storage place in a parcel compartment facility (60) is made before it is determined that the shipment (10) cannot be handed over to an authorized recipient (30) at the delivery address (20).

18. The method according to one or more of the preceding Claims 1 to 16,
**characterized in that**
the association of an identification means (40) with a storage place in a parcel compartment facility (60) is made after it is determined that the shipment (10) cannot be handed over to an authorized recipient (30) at the delivery address (20).

19. The method according to one or more of the preceding claims,
**characterized in that,**
when a recipient (30) is associated with a storage place in a parcel compartment facility (60) by an identification means (40), a compartment is reserved in the appertaining parcel compartment facility (60).

20. An arrangement for carrying out a method for delivering a shipment (10) according to one or more of Claims 1 to 19, whereby the arrangement comprises at least one central data management unit (70) and an electronic parcel compartment facility (60) that each have means for exchanging data, and whereby the parcel compartment facility (60) has at least means for recording, storing and comparing identification means (40), and the arrangement has means (80) for generating an identification means (40), whereby the identification means (40) serves to associate a recipient (30) of a shipment (10) with a storage place in a parcel compartment facility (60) of the arrangement, and the arrangement is provided with means for generating a notification means (50), whereby the notification means (50) can be provided with data for identifying a parcel compartment facility (60), with data about the recipient (30) and with the identification means (40),
**characterized in that**
the arrangement comprises at least the following components:
- means (90) for generating information about storage places in a parcel compartment facility (60), whereby the information serves to associate a recipient (30) of a shipment (10) with a storage place; and
- recording means for acquiring the signature of the person picking up a shipment (10) from a means that has been provided with the signature, whereby the recording means is located at a parcel compartment facility (60).

21. The arrangement according to Claim 20,
**characterized in that**
the arrangement has means for acquiring the signature of the person picking up a shipment (10) from the notification means (50) or from a personal identity card.

22. The arrangement according to Claim 20,
**characterized in that**
the means (90) for generating information about storage places in a parcel compartment facility (60) can be connected to the central data management unit (70).

23. The arrangement according to one or both of Claims 20 and 22,
**characterized in that**
the means (90) for generating information about storage places in a parcel compartment facility (60) is a mobile device.

24. The arrangement according to one or more of Claims 20 to 23,
**characterized in that**
the identification means (40) consists of a barcode, a numerical code and/or a letter code.

25. The arrangement according to one or more of Claims 20 to 23,
**characterized in that**
the notification means (50) is provided with two identical identification means (40), whereby at least one identification means (40) can be detached from the notification means (50).

## Revendications

1. Procédé de livraison d'un envoi (10), dans lequel l'envoi est transporté vers une adresse de livraison (20) à laquelle un moyen de notification (50) est déposé s'il est constaté qu'aucune remise de l'envoi (10) à un destinataire autorisé (30) n'est possible, le moyen de notification (50) étant pourvu au moins de données pour désigner le système à compartiments pour paquets (60), de données du destinataire (30) et du moyen d'identification (40), et un dépôt de l'envoi (10) étant effectué dans un compartiment d'un système électronique à compartiments pour paquets (60), alors qu'au moins le moyen d'identification (40) associé au destinataire (30) de l'envoi (10) étant saisi et stocké pour le compartiment concerné,
**caractérisé par** les étapes suivantes:
- association d'une place de chargement d'un système à compartiments pour paquets (60) à un destinataire (30) de l'envoi (10) par un moyen d'identification (40);
- retrait de l'envoi (10) au système à compartiments pour paquets (60) par une personne venue pour le retirer,
- - au moins le moyen d'identification (40) associé au destinataire (30) de l'envoi (10) étant saisi,
- - une comparaison entre le moyen d'identification (40) associé au destinataire (30) de l'envoi (10) et les moyens d'identification stockés pour des compartiments occupés ayant lieu,
- la signature de la personne venue pour effectuer le retrait étant saisie, la signature étant saisie à partir d'un moyen pourvu de la signature, et
- la délivrance de l'envoi déposé (10) hors d'un compartiment ayant lieu s'il ressort du résultat de la comparaison que le moyen d'identification (40) associé au destinataire coïncide avec un moyen d'identification stocké pour le compartiment concerné.

2. Procédé selon la revendication 1, **caractérisé en ce que**, au dépôt de l'envoi (10) dans un système à compartiments pour paquets (60) et/ou au retrait de l'envoi (10) hors du système à compartiments pour paquets (60), des données concernant l'opération respective sont transmises à une unité centrale de gestion de données (70).

3. Procédé selon l'une des ou les deux revendications 1 et 2, **caractérisé en ce que**, au dépôt de l'envoi (10) dans un système à compartiments pour paquets (60), une somme d'argent est saisie et **en ce que** l'acquittement de cette somme d'argent est une condition pour la délivrance de l'envoi (10)) lors du retrait de l'envoi par une personne venue pour le retirer.

4. Procédé selon la revendication 3, **caractérisé en ce que** l'acquittement de la somme d'argent au système à compartiments pour paquets (60) se fait par l'intermédiaire d'une fonction de carte.

5. Procédé selon la revendication 4, **caractérisé en ce que** les cartes utilisables pour la fonction de carte sont des cartes EC, des cartes de crédit et/ou des cartes prépayées.

6. Procédé selon la revendication 3, **caractérisé en ce que** l'acquittement de la somme d'argent au système à compartiments pour paquets (60) se fait par de l'argent en espèces.

7. Procédé selon une ou plusieurs des revendications précédentes, **caractérisé en ce que**, au dépôt de l'envoi (10) et au retrait de l'envoi (10) par une personne venue pour le retirer, des données du destinataire (30) sont saisies et **en ce que** la coïncidence de ces données de destinataire est une condition pour la délivrance de l'envoi (10) lors du retrait de l'envoi par une personne venue pour le retirer.

8. Procédé selon une ou plusieurs des revendications précédentes, **caractérisé en ce que**, au dépôt de l'envoi (10), des données du destinataire sont saisies et, au retrait de l'envoi (10) par une personne venue pour le retirer, des données de la personne venue pour effectuer le retrait sont saisies, et **en ce que** la coïncidence de ces données set une condition pour la délivrance de l'envoi (10) lors du retrait de l'envoi par une personne venue pour le retirer.

9. Procédé selon la revendication 8, **caractérisé en ce que**, dans le cas de la non-coïncidence entre données du destinataire et données de la personne venue pour effectuer le retrait, une fonction est activée, par l'intermédiaire de laquelle la personne venue pour effectuer le retrait peut se désigner comme étant le destinataire de remplacement, ceci étant une condition pour la délivrance de l'envoi (10).

10. Procédé selon une ou plusieurs des revendications 7 à 9, **caractérisé en ce que**, pour remplir la condition de délivrance de l'envoi, un degré déterminé de coïncidence entre les données est nécessaire.

11. Procédé selon une ou plusieurs des revendications 7 à 10, **caractérisé en ce que**, pour remplir la condition de délivrance de l'envoi, une coïncidence entre une partie des données est nécessaire.

12. Procédé selon la revendication 1, **caractérisé en ce que** le moyen pourvu de la signature est le moyen de notification (50).

13. Procédé selon la revendication 1, **caractérisé en ce que** le moyen pourvu de la signature est une carte d'identité.

14. Procédé selon l'une des ou les deux revendications 7 et 8, **caractérisé en ce que** la saisie de données du destinataire et/ou de données sur la personne venue pour effectuer le retrait se produit, au retrait d'un envoi (10), par l'intermédiaire d'une saisie effectuée par la personne venue pour effectuer le retrait.

15. Procédé selon la revendication 14, **caractérisé en ce que** la saisie de données du destinataire et/ou de données sur la personne venue pour effectuer le retrait se produit, au retrait de l'envoi (10), par la lecture de moyens pourvus des données respectives.

16. Procédé selon la revendication 15, **caractérisé en ce que** les moyens pourvus des données respectives sont un moyen de notification (50), une carte d'identité, une carte EC, une carte de crédit et/ou une carte prépayée.

17. Procédé selon une ou plusieurs des revendications précédentes, **caractérisé en ce que** l'association d'un moyen d'identification (40) à une place de chargement d'un système à compartiments pour paquets (60) se produit avant la constatation du fait qu'aucune remise de l'envoi (10) à un destinataire autorisé (30) n'est possible à l'adresse de livraison (20).

18. Procédé selon une ou plusieurs des revendications précédentes 1 à 16, **caractérisé en ce que** l'association d'un moyen d'identification (40) à une place de chargement d'un système à compartiments pour paquets (60) se produit après la constatation du fait qu'aucune remise de l'envoi (10) à un destinataire autorisé (30) n'est possible à l'adresse de livraison (20).

19. Procédé selon une ou plusieurs des revendications précédentes,
**caractérisé en ce que** se produit, avec l'association d'un destinataire (30) à une place de chargement d'un système à compartiments pour paquets (60) par un moyen d'identification (40), la réservation d'un compartiment du système à compartiments pour paquets (60) concerné.

20. Système permettant d'exécuter un procédé de livraison d'un envoi (10) selon l'une ou plusieurs des revendications 1 à 19, le système comprenant au moins une unité centrale de gestion de données (70) et un système électronique à compartiments pour paquets (60), lesquels comportent respectivement des moyens permettant l'échange de données, le système à compartiments pour paquets (60) comportant au moins des moyens de saisie, de stockage et de comparaison de moyens d'identification (40), et le système comportant des moyens (80) pour générer un moyen d'identification (40), le moyen d'identification (40) servant à associer un destinataire (30) d'un envoi (10) à une place de chargement d'un système à compartiments pour paquets (60) du système, et le système comportant des moyens pour générer un moyen de notification (50), le moyen de notification (50) pouvant être pourvu de données pour désigner un système à compartiments pour paquets (60), de données du destinataire (30) et du moyen d'identification (40),
**caractérisé en ce que**
le système comprend au moins les composants suivants:
- des moyens (90) pour générer des informations sur des places de chargement d'un système à compartiments pour paquets (60), les informations servant à associer un destinataire (30) d'un envoi (10) à une place de chargement et
- des moyens de saisie pour saisir la signature de la personne venue pour retirer un envoi (10) à partir d'un moyen qui est pourvu de la signature, les moyens de saisie se trouvant sur un système à compartiments pour paquets (60).

21. Système selon la revendication 20, **caractérisé en ce que** le système comporte des moyens pour saisir la signature de la personne venue pour retirer un envoi (10) à partir du moyen de notification (50) ou d'une carte d'identité.

22. Système selon la revendication 20, **caractérisé en ce que** le moyen (90) pour générer des informations sur des places de chargement d'un système à compartiments pour paquets (60) peut être relié à l'unité centrale de gestion de données (70).

23. Système selon l'une des ou les deux revendications 20 et 22, **caractérisé en ce que** le moyen (90) pour générer des informations sur des places de chargement d'un système à compartiments pour paquets (60) est un dispositif mobile.

24. Système selon l'une ou plusieurs des revendications 20 à 23, **caractérisé en ce que** le moyen d'identification (40) se compose d'un code-barres, d'un code de chiffres et/ou d'un code de lettres.

25. Système selon l'une ou plusieurs des revendications 20 à 23, **caractérisé en ce que** le moyen de notification (50) est pourvu de deux moyens d'identification identiques (40), au moins un moyen d'identification (40) étant détachable du moyen de notification (50).
